Europäisches Patentamt

European Patent Office

Office européen des brevets

(19)

(11) Veröffentlichungsnummer : **0 002 032**
**B1**

(12)     **EUROPÄISCHE PATENTSCHRIFT**

(45) Veröffentlichungstag der Patentschrift :
14.09.83

(21) Anmeldenummer : 78101334.7

(22) Anmeldetag : 09.11.78

(51) Int. Cl.³ : **B 21 D 53/26**, B 21 D 26/02//
F16H55/44

(54) Verfahren und Vorrichtung zum Herstellen mehrrilliger Keilriemenscheiben.

(30) Priorität : 17.11.77 US 852563

(43) Veröffentlichungstag der Anmeldung :
30.05.79 Patentblatt 79/11

(45) Bekanntmachung des Hinweises auf die Patenterteilung : 14.09.83 Patentblatt 83/37

(84) Benannte Vertragsstaaten :
BE CH DE FR GB LU NL SE

(56) Entgegenhaltungen : ·
DE A 1 933 494
FR A 1 012 154
FR A 1 087 300
FR A 1 499 135
FR A 1 508 273
FR A 2 043 555
US A 3 820 369
US A 3 837 200
US A 3 851 366
US A 3 935 627

MACHINE MODERNE, AUTOMNE 1974, Paris, FR,
P. BOURGOIN « Un procédé original l'hydroflambage », Seiten 16-21

(73) Patentinhaber : Schroth, Wilhelm Heinrich
Ringstrasse 12
D-6053 Obertshausen (DE)

(72) Erfinder : Schroth, Wilhelm Heinrich
Ringstrasse 12
D-6053 Obertshausen (DE) ·

(74) Vertreter : Holzhäuser, Peter Karl, Dr.-Ing. et al
Herrnstrasse 37
D-6050 Offenbach am Main (DE)

Verfahren und Vorrichtung zum Herstellen mehrrilliger Keilriemenscheiben

Die Erfindung betrifft eine Vorrichtung und ein Verfahren zum Herstellen mehrrilliger Keilriemenscheiben, wobei zunächst ein topfförmiger Rohling aus Blech durch Kaltverformung gefertigt und sodann mit seinem Rand zwischen einem axial stützenden Auflager mit einer kegelstumpfförmigen Fläche und radial heran bewegbaren Rillenformteilen mit Keilflächen eingeklemmt wird, wobei ferner axial und radial beweglich geführte Rillenformteile in zur Erzielung der beabsichtigten Rillenmittenabstände erforderlichen Abständen vorgesehen werden und der Rohling mit Flüssigkeit gefüllt und unter Regulierung des Flüssigkeitsdruckes und der Flüssigkeitsmenge mit Hilfe eines außen auf den Boden des Rohlings wirkenden, vom Pressenstempel bewegbaren Formteiles sowie mit Hilfe von den am Umfang des Rohlings angreifenden Rillenformteilen verformt wird, wobei die Rillenformteile von dem sich verformenden Rohling infolge von Berührungsschluß axial verschoben werden.

In der Fachzeitschrift Machine Moderne, Automne 1974, Paris, Seiten 16-21, sind ein derartiges Verfahren und die zugehörige Vorrichtung beschrieben. Danach wird der Rohling mit seinem Rand zwischen einem beweglich gelagerten, als axial stützendes Auflager dienenden Verschlußteil und lediglich radial bewegbaren Rillenformteilen eingeklemmt, mit Flüssigkeit gefüllt und sodann unter dem Druck des auf den Boden des Rohlings wirkenden, vom Pressenstempel bewegbaren Formteiles sowie der anderen, axial frei beweglich geführten Rillenformteile verformt. Die Flüssigkeit im Inneren des Rohlings soll ferner nach Fertigstellung der Keilriemenscheibe mit Hilfe eines zweiten, durch das Verschlußteil arbeitenden Kalibrierkolbens unter einem sehr hohen Druck (5 000 Bar) gesetzt werden, um exakte Abmessungen am fertigen Produkt zu erhalten.

Das aus Machine Moderne bekannte Verfahren bzw. die dort beschriebene Vorrichtung sind nicht frei von technischen Problemen, worauf bereits in dieser Veröffentlichung hingewiesen wird. Die Schwierigkeiten rühren wahrscheinlich von verfahrens- und vorrichtungsbedingten Dichtungsproblemen her, die im Bereich des von zwei Kniehebeleinrichtungen beweglichen Verschlußteiles entstehen. In Anbetracht der sehr hohen Drücke ist dort eine sichere Abdichtung kaum möglich, was zur Folge hat, daß in unkontrollierter Weise Flüssigkeit aus dem Rohling austritt und zu Herstellungsungenauigkeiten führt.

Ferner sind aus der US-PS 3 935 627 ein Verfahren der hier interessierenden Art und eine Vorrichtung bekannt, die sowohl einen oberen Pressenstempel als auch einen unteren Arbeitsstempel aufweist, der mit Hilfe eines horizontal verschiebbaren Keiles angehoben bzw. abgesenkt wird. Auch bei dieser Vorrichtung sind radial an den Rohling heran bewegbare, segmentförmig gestaltete und Ringe bildende Rillenformteile vorgesehen, wobei sich die Rillenformteile für die eine Keilrille auf den Rillenformteilen für die andere Keilrille abstützen. Der zur Erzielung der beabsichtigten Rillenmittenabstände erforderliche Abstand zwischen den Rillenformteilen wird zu Beginn jedes Arbeitsvorganges durch die Wirkung von Federn erreicht.

Die Druckerzeugung in der im Inneren des Rohlings befindlichen Flüssigkeit erfolgt allein mit Hilfe des Pressenstempels. Der untere und in das Innere des Rohlings greifende Arbeitsstempel befindet sich zu Beginn eines Arbeitsvorganges im Abstand von dem Boden des Rohlings und wird beim Absenken des Pressenstempels zurückgenommen. Noch vor Beendigung des Herstellungsvorganges kommt er jedoch innen am Boden der halb fertiggestellten Keilriemenscheibe zur Anlage und wird dann parallel mit dem Pressenstempel weiterbewegt, während sich eine zweite Keilrille bildet.

Obwohl die während des Herstellungsvorganges auftretenden Drücke sowohl am Pressenstempel als auch im Inneren der Flüssigkeit nicht besonders groß sind, dürften verfahrens- und vorrichtungsbedingte Dichtungsprobleme sowie die fehlende Möglichkeit, die axial frei beweglich angeordneten Rillenformteile zu Beginn eines jeden Arbeitsvorganges auf den beabsichtigten Rillenmittenabstand absolut exakt einzustellen und dort zu fixieren dazu geführt haben, daß es mit der aus der US-PS 3 935 627 bekannten Vorrichtung nicht möglich ist, Keilriemenscheiben mit den geforderten Toleranzbereichen herzustellen.

Der Erfindung liegt daher die Aufgabe zugrunde, Maßnahmen vorzusehen, damit die außen am Rohling angreifenden Rillenformteile zu Beginn jedes Verformungsvorganges eine exakt fixierte Lage einnehmen, die sicherstellt, daß sie sich während des Herstellungsvorganges in der vorbestimmten Weise bewegen.

Gelöst wird diese der Erfindung zugrunde liegende Aufgabe dadurch, daß vor dem axialen Verpressen des Rohlings durch das vom Pressenstempel bewegliche Formteil die Flüssigkeit derart unter Druck gesetzt wird, daß sich der Rohling an die axial beweglich geführten Rillenformteile fest anlegt. Es wird also bereits vor der in axialer Richtung erfolgenden Verformung des Rohlings der Druck der im Inneren des Rohlings befindlichen Flüssigkeit derart gesteuert bzw. erhöht, daß sich die Wandung des Rohlings fest an die axial frei beweglichen Rillenformteile anlegt. Diese besitzen dadurch eine genau definierte Lage und bewegen sich beim Absenken des Pressenstempels entsprechend der Verformung des Rohlings bis in die Endstellung, ohne ihre anfängliche Position am Rohling zu verlieren. Das fertige Produkt besitzt dadurch eine hohe Herstellungsgenauigkeit.

Weiterbildungen und besondere Ausgestaltungen der Erfindung gehen aus den einzelnen Ansprüchen hervor.

Die Erfindung wird nachstehend anhand eines Ausführungsbeispieles, das in der Zeichnung dargestellt ist, näher beschrieben. Dabei zeigen :

Figur 1 eine zum Teil im Schnitt dargestellte Ansicht eines vorgefertigten, topfförmigen Rohlings ;

Figur 2 eine zum Teil im Schnitt dargestellte Ansicht einer dreirilligen Keilriemenscheibe ;

Figur 3 einen Schnitt durch die Vorrichtung zur Herstellung der Keilriemenscheibe gemäß Fig. 2 in kleinerem Maßstab in zwei Arbeitsstellungen gemäß der rechten bzw. linken Hälfte der Darstellung ;

Figur 4 einen Schnitt längs der Linie IV-IV in Fig. 3 ;

Figur 5 eine prinzipmäßige Darstellung der den hydraulischen Druck im Rohling erzeugenden Einrichtung und

Figur 6 eine prinzipmäßige Darstellung der dem Pressenstempel und die radial gerichtete Bewegung der Rillenformteile steuernden hydraulischen Einrichtung.

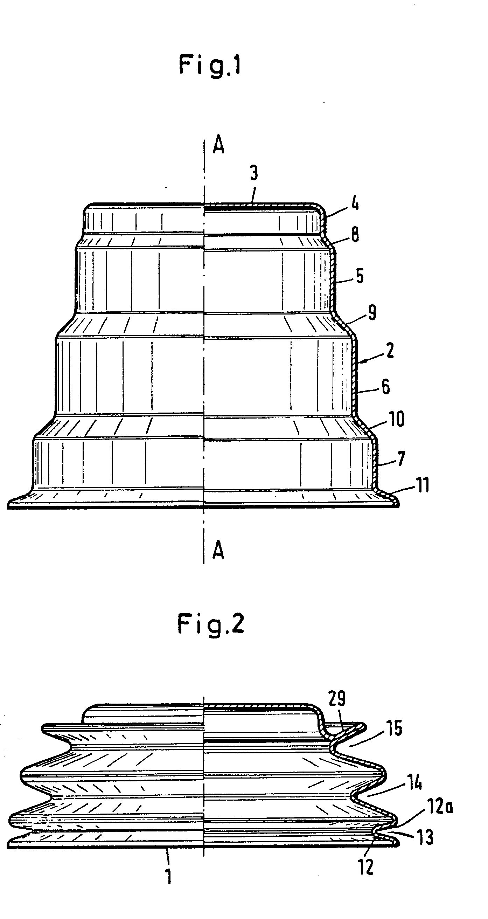

Zur Herstellung einer beispielsweise dreirilligen Keilriemenscheibe 1 gem. Fig. 2 dient ein Rohling 2 gem. Fig. 1, der in an sich bekannter Weise durch Tiefziehen eines Blechteiles hergestellt wird. Dieser Rohling 2 ist ein topfförmiger Körper mit einem Boden 3, an den sich ein Zylinderteil 4 anschließt. Im Abstand von dem Zylinderteil 4 sind weitere Zylinderteile 5, 6 und 7 vorgesehen, zwischen denen sich jeweils konische Bereiche 8, 9 und 10 befinden. An den Zylinderteil 7 schließt noch ein konischer Rand 11 an, der bei der fertiggestellten Keilriemenscheibe 1 die äußere Begrenzungswand 12 der einen, außen liegenden Keilnut oder Keilrille 13 bildet.

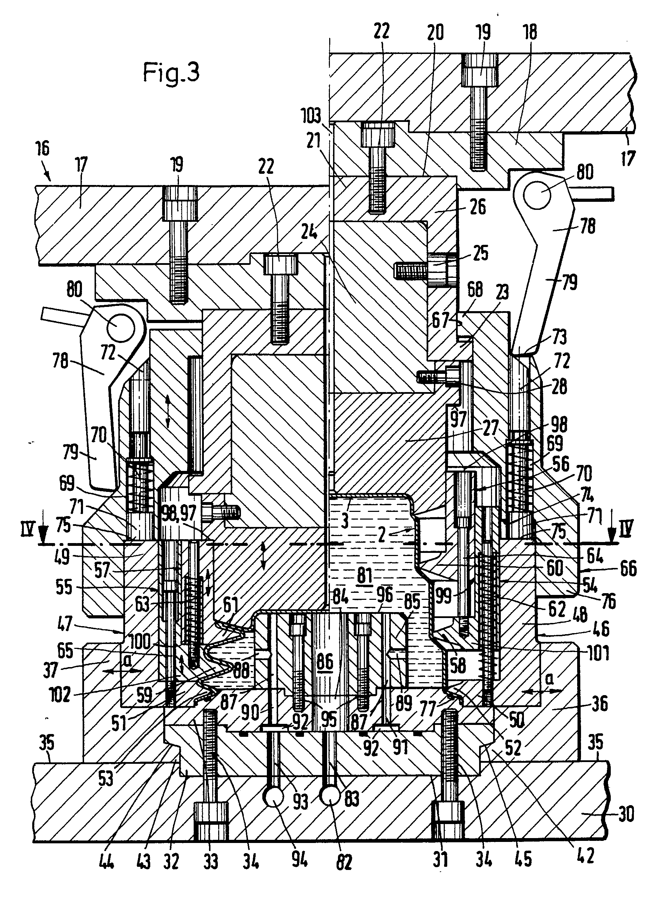

Die andere Begrenzungswand und die beiden anderen Keilrillen 14 und 15 werden nach dem erfindungsgemäßen Verfahren in der Vorrichtung 16 gem. Fig. 3 gefertigt.

Die Vorrichtung 16 besteht von oben nach unten aus einem Oberwerkzeug mit einer Kopfplatte 17, an der eine Halte- oder Zentrierplatte 18 mit Hilfe von symbolisch angedeuteten Schrauben 19 befestigt ist. Die Zentrierplatte 18 weist eine Ausnehmung 20 auf, in der ein topfförmiges Führungs- und Lagerteil 21 mit Hilfe von Schrauben 22 gehalten ist. Ein flanschartiger, als Mitnehmer dienender Rand 23 des Lagerteiles 21 ragt über dessen beispielsweise zylindrischen Umfang vor.

Im Inneren des topfförmigen Lagerteiles 21 ist ein Stützteil oder Zwischenstück 24 angeordnet und mit Hilfe von Schrauben 25 in der Wand 26 des Lagerteiles 21 gesichert.

An dem Stützteil bzw. Zwischenstück 24 ist ein Formteil 27 mit Schrauben 28 befestigt, das während des Herstellungsvorganges auf den Boden 3 des Rohlings 2 auftrifft und bei der Formung der äußeren Begrenzungswand 29 der Keilnut 15 mitwirkt.

Von unten nach oben besteht die Vorrichtung 16 aus einer Bodenplatte 30 mit einer Ausnehmung 31, in der eine Zwischenplatte 32 liegt. Die Zwischenplatte 32 trägt ein den Rohling 2 axial stützendes Auflager 33, das ebenso wie die Zwischenplatte 32 mit Hilfe von Schrauben 34 an der Bodenplatte 30 befestigt ist.

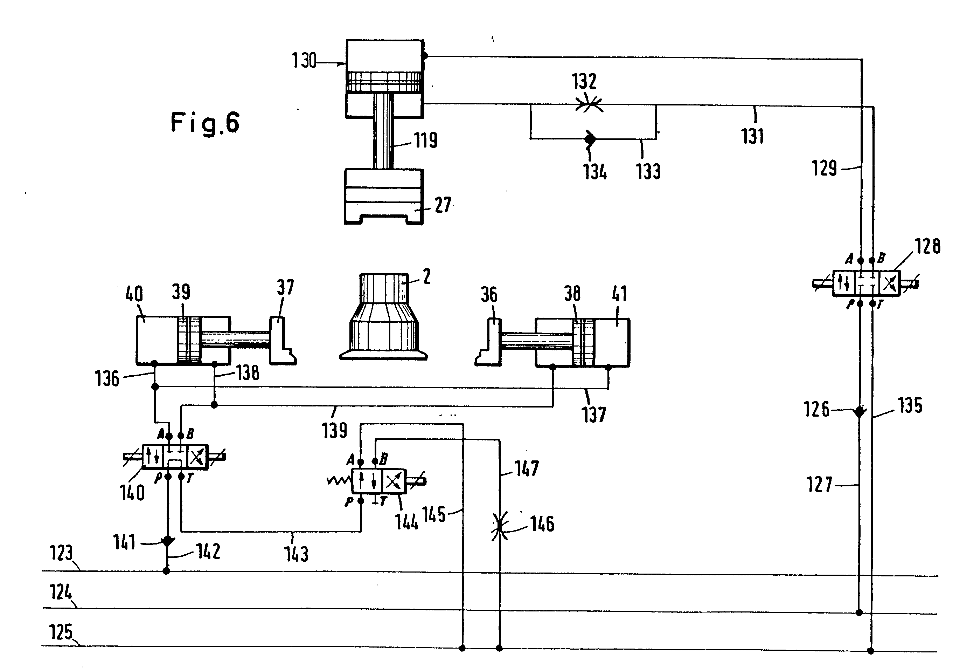

Unmittelbar auf der Oberfläche 35 der Bodenplatte 30 sind zwei Träger 36, 37 in Richtung der Pfeile a horizontal bzw. auf die Zwischenplatte 32 und das Auflager 33 hin- und wegbewegbar angeordnet. Hierzu dienen hydraulische Einrichtungen mit Kolben 38, 39 und Zylindern 40, 41, die in Fig. 6 dargestellt sind.

Die Träger 36 und 37 sind halbkreisförmig und bilden zusammen einen Ring. Zum Verriegeln an der Bodenplatte 30 ist an ihrem inneren Umfang ein Absatz bzw. Halterand 42 bzw. 43 mit einer Schrägfläche 44 bzw. 45 angeordnet, die an einer entsprechenden Schrägfläche der Zwischenplatte 32 im zusammengefahrenen Zustand formschlüssig anliegt bzw. unter diese Zwischenplatte 32 greift.

An den Trägern 36, 37 sind in geeigneter Weise Rillenformteile 46, 47 befestigt, die im wesentlichen die Gestalt von zylindrischen Halbschalen 48, 49 besitzen. An ihrem unteren Ende ist einstückig je ein Ringflansch 50, 51 angeordnet, dessen radial innen liegender Randbereich 52, 53 die zur Herstellung der Keilrille 13 erforderliche Keilform besitzt. Jeweils zwei Rillenformteile bilden einen Formring.

Die Rillenformteile 46, 47 dienen als Träger für weitere Rillenformteile 54, 55 und diese wiederum für Rillenformteile 56, 57. Die Rillenformteile 54-57 sind im wesentlichen genauso gestaltet wie die Rillenformteile 46, 47 und bestehen aus zylindrischen Halbschalen mit je einem Ringflansch am einen Ende und je einem im Querschnitt keilförmigen Randbereich 58, 59 bzw. 60, 61 zur Herstellung der Keilrillen 14, 15 der Keilriemenscheibe 1.

Die Rillenformteile 54-57 sind in den Rillenformteilen 46, 47 in axialer Richtung frei beweglich geführt. Hierzu dienen die Oberflächen ihrer zylindrischen Halbschalen. Wie aus Fig. 3 hervorgeht, sind die Rillenformteile 56, 57 in die Rillenformteile 46, 47 eingesetzt und die Rillenformteile 56, 57 sind wiederum radial innen in den Rillenformteilen 54, 55 angeordnet. Um ein Auseinanderfallen der Rillenformteile zu verhindern, befinden sich mehrere Keile 48 a, 49 a zwischen den verschiedenen Rillenformteilen.

Diese Keile liegen in Achsrichtung und greifen jeweils in zwei benachbarte, axial relativ zueinander verschiebbare Rillenformteile.

Ferner sind mehrere Federn 62 vorgesehen, die die Rillenformteile 54 und 55 von den Rillenformteilen 46, 47 in axialer Richtung wegdrücken. Das gleiche gilt für Federn 63, die zwischen den Rillenformteilen 54, 55 und den Rillenformteilen 56, 57 wirksam sind. Begrenzt wird die von den Federn 62, 63 hervorgerufene Verschiebung der Rillenformteile 54, 55 relativ zu den Rillenformteilen 46, 47 bzw. der Rillenformteile 56, 57 relativ zu den Rillenformteilen 54, 55 durch mehrere Anschlagbolzen bzw. Stellschrauben 64, 65, die die Stellung sämtlicher Rillenformteile in der Ausgangsstellung vor Arbeitsbeginn gemäß der Darstellung in der rechten Hälfte der Fig. 3 genau fixieren. Die Federn 62 und 63 drücken die Rillenformteile auseinander, bis sie die durch die Stellschrauben 64, 65 definierte Stellung erreicht haben. Die Stellschrauben 64, 65, die in ausreichender Anzahl über den gesamten Umfang der Rillenformteile 54-57 vorgesehen sind, dienen ferner zu ihrer genauen Einjustierung bzw. Positionierung, damit ihre keilförmigen Randbereiche 58-60 bei Beginn eines jeden Arbeitsganges die genau vorbestimmte Stellung einnehmen.

Die Fig. 3 zeigt schließlich noch einen hülsenförmigen Halte- und Stützkörper bzw. Stützring 66 mit einer glockenähnlichen Gestalt, der in seinem Kopfteil eine Bohrung 67 aufweist, durch die die zylindrische Wand 26 des topfförmigen Lagerteiles 21 greift.

Der hülsenförmige Stützring 66 ist auf der äußeren Oberfläche der Wand 26 gleitend gelagert und wird von dem Lagerteil 21 mit Hilfe des als Mitnehmer dienenden flanschartigen Randes 23 gehalten, der einen entsprechenden, als Gegenanschlag dienenden, flanschartigen Rand 68 am Kopfteil des Stützringes 66 hintergreift.

An seinem Umfang besitzt der Stützring 66 mehrere Bohrungen 69, in denen von Federn 70 beaufschlagte Stößel 71 angeordnet sind, die ein freies, keilförmiges Ende 72 aufweisen. Die keilförmigen Enden 72 der Stößel 71 ragen aus den Bohrungen 69 an einem als Anschlag dienenden radialen Absatz 73 des Stützringes 66 heraus, wenn die Stößel 71 und ein Absatz 74 in seinem Inneren auf der Stirnfläche 75 der äußeren Rillenformteile 46, 47 aufliegen. Mit einem zylindrischen Teil 76 umgreift der Stützring 66 die äußeren Rillenformteile 46, 47, so daß sich diese während des eigentlichen Arbeitsvorganges nicht in Richtung der Pfeile a radial auswärts bewegen können.

Vor Beginn des ersten Arbeitsganges befinden sich die an einem Pressenstempel befestigte Kopfplatte 17 und alle mit ihr verbundenen Teile einschließlich des Formteiles 27 und des Stützringes 66 in einer derart angehobenen Stellung, daß die Träger 36, 37 und mit ihnen alle Rillenformteile 46, 47, 54, 55, 56, 57 frei und ungehindert in Richtung der Pfeile a nach außen verschiebbar sind. Der Raum zwischen sämtlichen Rillenformteilen ist zugänglich, so daß ein Rohling 2 auf das eine ringförmige Dichtung 77 und eine kegelstumpfförmige Fläche aufweisende Auflager 33 von Hand abgesetzt werden kann. Daraufhin werden die Träger 36 und 37 mit ihren Rillenformteilen aufeinanderzu bewegt und die Kopfplatte 1 wird vom Pressenstempel abgesenkt, wobei der zylindrische Teil 76 des Stützringes 66 über die äußeren Rillenformteile 46, 47 gleitet, wie dies in der rechten Bildhälfte der Fig. 3 dargestellt ist. Der hülsenförmige Stützring 66 wird dabei mit Hilfe von Rasthebeln 78 über die Rillenformteile 46, 47 gedrückt, die auf dem als Anschlag dienenden, radial gerichteten Absatz 73

des Stützringes 66 aufliegen. Wenn die Stößel 71 in dem Stützring 66 auf den Stirnflächen 75 der Rillenformteile 46, 47 anschlagen, verschwenken die keilförmigen Enden 72 der Stößel 71 die Rasthebel 78 radial auswärts, so daß der Stützring 66 in der in der linken Bildhälfte der Fig. 3 dargestellten Lage verbleibt, auch wenn die Kopfplatte 17 und die mit ihr verbundenen Teile, wie beispielsweise auch die auf den Achsen 80 sitzenden Rasthebel 78, weiter abgesenkt werden. Die Rasthebel 78 laufen mit ihren freien Enden 79 während des weiteren Absenkens an der Außenkontur des Stützringes 66 entlang und sind von nicht dargestellten Federn in Richtung auf den Stützring 66 hin belastet, damit sie nach dem Anheben der Kopfplatte 17 wieder in ihre Ausgangsstellung zurückschwenken.

Sobald beim Absenken der Kopfplatte 17 der Formteil 27 auf dem Boden 3 des Rohlings 2 aufliegt, wird das Innere 81 des Rohlings mit Flüssigkeit gefüllt. Dies geschieht durch eine Bohrung 82 in der Bodenplatte 30, die mit einer Bohrung 83 in der Zwischenplatte 32 und einer Bohrung 84 in dem den Rohling 2 tragenden Auflager 33 in Verbindung steht. Aus dem Auflager 33 ist ferner noch ein Distanzstück 85 angeordnet, das ebenfalls eine Bohrung 86 aufweist, die die Bohrung 84 mit dem Inneren 81 des Rohlings 2 verbindet.

Schließlich befinden sich in dem Distanzstück 85 noch mehrere, achsparallel sowie quer dazu bis zur Oberfläche des Distanzstückes gerichtete Bohrungen 87, 88 und 89, die das Innere 81 des Rohlings 2 über Bohrungen 90, 91 sowie eine Ringbohrung 92 im Boden des Auflagers 33 mit einer Bohrung 93 in der Zwischenplatte 32 und einer Bohrung 94 in der Bodenplatte 30 verbinden. Die zuletzt genannten Bohrungen dienen zur Entfernung der Flüssigkeit aus dem Inneren 81 des Rohlings, wenn dieser verformt wird.

Das Distanzstück 85 ist, wie aus Fig. 3 hervorgeht, mit Hilfe von Schrauben 95 am Auflager 33 befestigt und dient nicht nur zur Einleitung und Entnahme der Druckflüssigkeit, sondern auch mit seiner oberen Stirnfläche 96 als Anschlag bei Beendigung des Herstellungsvorganges.

Wenn die Träger 36, 37 mit ihren Rillenformteilen bei Beginn des Herstellungsvorganges an den eingesetzten Rohling 2 herangeschoben werden, befinden sich die Rillenformteile aufgrund der Federn 62, 63 und der Bolzen bzw. Stellschrauben 64, 65 in einer genau vorbestimmten Arbeitsstellung. Wird nach Absenken des Stützringes 66 das Innere 81 des Rohlings 2 mit Druckflüssigkeit gefüllt, so legt sich der Rohling 2 fest an die keilförmigen Bereiche der Rillenformteile an. Wird nunmehr der Formteil 27 über das ihn mit der Kopfplatte 17 verbindende Teil zum Auflager 33 hin verschoben, so weicht das Material des Rohlings in die Räume aus, die zwischen den keilförmigen Randbereichen der im Abstand voneinander befindlichen Rillenformteile vorhanden sind. Da die frei beweglichen Rillenformteile 54, 55 und 56, 57 mit ihren keilförmigen Randbereichen 58, 59 bzw. 60, 61 am Umfang des Rohlings linienförmig durch den in dessen Inneren herrschenden hohen Druck fixiert sind, bewegen sie sich kontinuierlich bei Absenkung des Formteiles 27 ebenfalls in Richtung auf das Auflager 33 und die Rillenformteile 33 und 46, 47 zu, ohne daß hierbei irgendein anderes Teil die besagten Rillenformteile 54, 55 und 56, 57 verschiebt. Erst bei Erreichen der Endstellung gemäß der linken Hälfte der Darstellung in Fig. 3 legt sich der Formteil 27 mit einem ringförmigen Absatz 97 auf die freie Stirnfläche 98 der inneren Rillenformteile 56, 57 auf und drückt dadurch sämtliche Rillenformteile gegen das Auflager 33 bzw. die Träger 36, 37. Die hierbei axial gerichteten Kräfte werden von den unteren Stirnflächen 99, 100 der Rillenformteile 56, 57 auf die Ringflansche 101, 102 der Rillenformteile 54, 55 und von dort auf die Ringflansche 50, 51 übertragen, wobei die Keilriemenscheibe 1 ihre endgültige Gestalt erhält.

Wird die Kopfplatte 17 nach Beendigung des Arbeitsganges angehoben, so gleitet das Formteil 27 aus den beiden Rillenformteilen 56, 57 heraus, ohne daß diese zunächst ihre Lage gemäß der linken Hälfte der Darstellung in Fig. 3 verändern. Wenn auch der Stützring 66 von den äußeren Rillenformteilen 46, 47 abgezogen ist, können sich die Träger 36, 37 mit ihren Rillenformteilen in Richtung der Pfeile a auswärts bewegen. Die fertiggestellte Keilriemenscheibe 1 kann daraufhin von dem Distanzstück 85 bzw. dem Auflager 33 abgehoben werden und die Vorrichtung ist frei zum Einlegen des nächsten Rohlings 2.

Die im Formteil 27 und den darüber befindlichen Teilen angeordnete Bohrung 103 dient zum Entlüften des über dem Rohling 2 befindlichen Raumes beim Absenken des Formteiles 27.

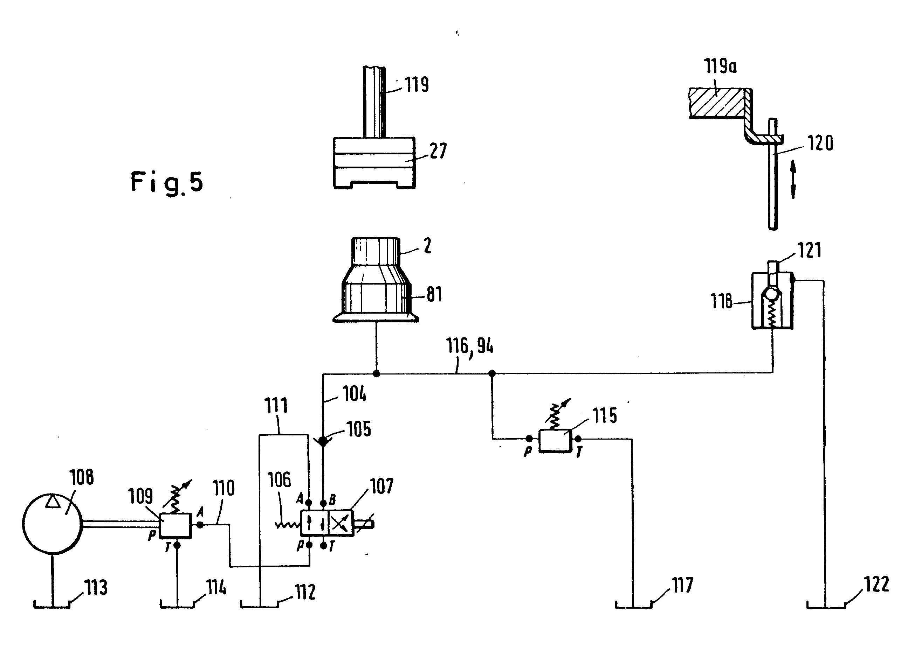

Die Fig. 5 zeigt in schematischer Darstellung die hydraulischen Einrichtungen, die zum Füllen und Entleeren des Inneren 81 des Rohlings 2 erforderlich sind. Die Füllung des Inneren 81 erfolgt über eine Leitung 104, in der sich ein Rückschlagventil 105 und ein von einer Feder 106 beaufschlagtes und mit Hilfe eines Elektromagneten gesteuertes Ventil 107 befinden, das eine von einer Pumpe 108 und einem Druckregelventil 109 kommende Leitung 110 wahlweise über eine Leitung 111 mit einem Tank 112 oder der Leitung 104 verbindet. Die Pumpe 108 entnimmt die Flüssigkeit einem Tank 113 und auch das Druckregelventil 109 ist mit seinem Ausgang T mit einem Tank 114 verbunden.

Bei der dargestellten Schaltung des Ventiles 107 strömt die von der Pumpe 108 kommende Flüssigkeit durch die Leitung 110 zum Eingang P des Ventiles 107 und von dort zum Ausgang A und durch die Leitung 111 zum Tank 112. Dies entspricht der Ruhestellung. Wird das Ventil 107 umgeschaltet, so strömt die Flüssigkeit vom Eingang P zum Ausgang B und durch das Rückschlagventil in der Leitung 104 zum Inneren 81 des Rohlings 2.

Wird beim Absenken des Pressenstempels bzw. des Formteiles 27 der Druck in der Flüssigkeit im Inneren 81 des Rohlings 2 durch Verformung des Rohlings 2 erhöht, so schließt das Rückschlagventil 105 und die Pumpe 108 fördert durch das Druckregelventil 109 in den Tank 114.

Während des Herstellungsvorganges muß im Inneren 81 des Rohlings 2 ein bestimmter Druck herrschen. Dieser Druck wird mit Hilfe eines Druckregelventiles 115 konstant gehalten, das über eine Leitung 116 mit dem Inneren 81 des Rohlings 2 verbunden ist. Übersteigt der Druck in der Flüssigkeit im Rohling 2 einen bestimmten Wert, so öffnet der Ausgang T des Druckregelventiles 115 und Flüssigkeit kann in einen Tank 117 entweichen, wodurch der Druck in der Flüssigkeit konstant gehalten wird.

Ein weiteres Ventil 118 ist an die Leitung 116 angeschlossen und dient zum völligen Öffnen dieser Leitung, wenn der die Kopfplatte 17 tragende Pressenstempel seine untereste Arbeitsstellung erreicht hat. An dem schematisch angedeuteten Pressenstempel 119 ist ein Kontaktgeber 120 angeordnet, der das als Kugelventil dargestellte Ventil 118 durch Verschieben von dessen Stößel 121 öffnet.

Sobald das Ventil 118 öffnet, sinkt der Druck im Inneren 81 des Rohlings 2 auf Null und die gesamte Flüssigkeit entweicht in den an das Ventil 118 angeschlossenen Tank 122.

Die Steuerung des Pressenstempels 119 und des mit ihm verbundenen Armes 119 a erfolgt unabhängig von der Füllung und Entleerung des Inneren 81 des Rohlings 2 in an sich bekannter Weise und ist daher in Fig. 5 nicht näher dargestellt.

Die Fig. 6 zeigt schließlich noch die hydraulische Einrichtung, mit der die Träger 36, 37 für die radial und axial verschiebbaren Rillenformteile bewegt werden.

Ferner zeigt Fig. 6 die hydraulischen Komponenten, mit deren Hilfe der Pressenstempel 119 und der mit dem Pressenstempel verbundene Arm 119a bewegt werden.

Die in Fig. 6 gezeigte hydraulische Einrichtung umfaßt eine Hochdruckleitung 124, eine Niederdruckleitung 123 und eine zu einem Tank führende Leitung 125. Von der Hochdruckleitung 124 führt eine ein Rückschlagventil 126 aufweisende Leitung 127 zu einem magnetgesteuerten Steuerventil 128 und von dessen Ausgang A ist eine Leitung 129 zum kopfseitigen Ende des Zylinders 130 einer Presse geführt, an deren Stempel 119 das Formteil 27 befestigt ist. Zwischen das andere Ende des Zylinders 130 und den Eingang B des Steuerventiles 128 ist eine Leitung 131 gelegt, die ein Drosselventil 132 und in einer das Drosselventil 132 umgehenden Leitung 133 ein Rückschlagventil 134 aufweist. Von dem Ausgang T des Steuerventiles 128 ist schließlich noch eine Leitung 135 zur Tankleitung 125 geführt.

Entsprechend der Stellung des Steuerventiles 128 fließt die Flüssigkeit vom Eingang P entweder zum Ausgang A oder zum Ausgang B und die jeweils vom Zylinder 130 zurückströmende Flüssigkeit wird zum Ausgang T gelenkt. Die Positionen A und B sind je nach Strömungsrichtung Eingang oder Ausgang des Steuerventiles 128.

Die beiden Zylinder 40 und 41 der hydraulischen Einrichtung, die die beiden Träger 36 und 37 mit ihren Rillenformteilen radial auf den Rohling zu und von diesem wegbewegen, sind kopfseitig über Leitungen 136, 137 mit dem Eingang/Ausgang A und über Leitungen 138, 139 mit dem Eingang/Ausgang B eines elektromagnetischen Steuerventiles 140 verbunden. An den Eingang P des Steuerventiles 140 ist eine ein Rückschlagventil 141 aufweisende Leitung 142 angeschlossen, die zur Niederdruckleitung 123 führt.

Schließlich ist noch eine Leitung 143 vorgesehen, die unter Zwischenschaltung eines Steuerventiles 144 den Ausgang oder Tankanschluß T des Steuerventiles 140 wahlweise direkt über eine Leitung 145 oder unter Zwischenschaltung eines Drosselventiles 146 in einer Leitung 147 mit der Tankleitung 125 verbindet. Je nach Stellung des Steuerventiles 144 strömt die Flüssigkeit von dem Steuerventil 140 zur Tankleitung 125 rasch durch die Leitung 145 oder langsam durch die Leitung 147, so daß die Träger 36, 37 mit zwei verschiedenen Geschwindigkeiten bewegt werden können.

Die elektrische Ansteuerung der verschiedenen Steuerventile 128, 140 und 144 ist nicht dargestellt, da sie dem Fachmann geläufig ist.

Änderungen und weitere Ausgestaltungen der Erfindung sind möglich, ohne von dem grundsätzlichen Erfindungsgedanken abzuweichen. So ist es beispielsweise möglich, nach dem erfindungsgemäßen Verfahren durch Einbau weiterer Rillenformteile auch mehrrillige Keilriemenscheiben mit mehr als drei Rillen, d. h. also mit vier oder fünf Rillen herzustellen. Ferner ist die erfindungsgemäße Vorrichtung nicht auf die Herstellung von Keilriemenscheiben mit bestimmten Durchmessern beschränkt, da die verschiedenen Rillen an beliebiger Position jeden gewünschten Durchmesser erhalten können.

Der hülsenförmige Stützring 66 kann auch so gestaltet sein, daß er nicht nur die Rillenformteile, sondern auch die Träger 36, 37 zu umgreifen vermag. Hierdurch wird auch deren Lage während des Arbeitsvorganges unverrückbar fixiert.

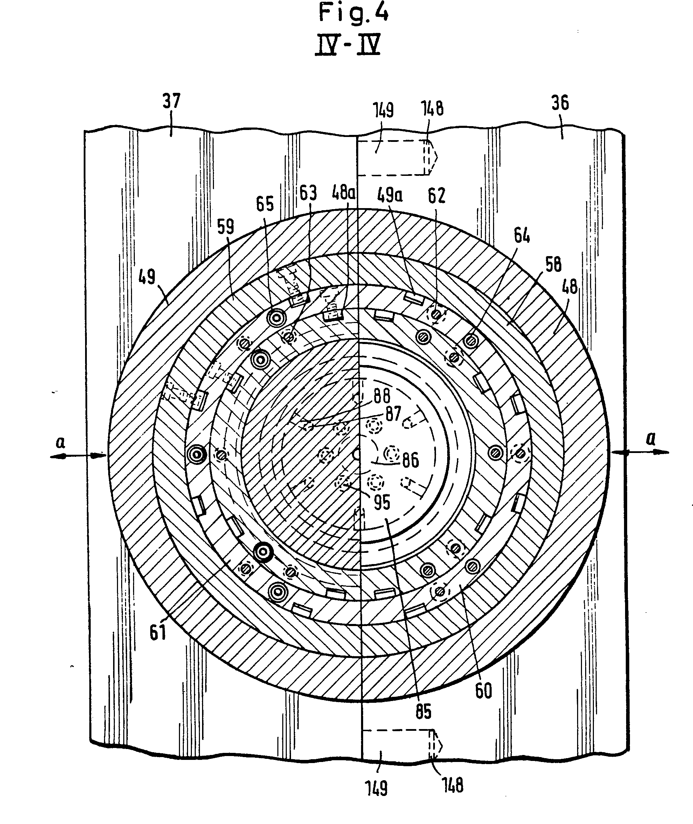

Ferner ist es möglich, zusätzlich in dem einen Träger 36 auch noch Bohrungen 148 und am anderen Träger 37 Zentrierbolzen 149 (Fig. 4) vorzusehen, die in diese Bohrungen greifen, wenn die beiden Träger 36, 37 aufeinanderzu verschoben sind.

Der hülsenförmige Stützring 66, die unter die Halte- und Zentrierplatte 32 greifenden Absätze bzw. Halteränder 42 und 43 an den Trägern 36 und 37 sowie die Zentrierbolzen 149 legen die Träger 36, 37 für die Rillenformteile während des Arbeitsvorganges unverrückbar fest bzw. verriegeln sie untereinander sowie an dem Auflager 33 der Bodenplatte 30 bzw. der Zwischenplatte 32.

Da die Träger für die Rillenformteile auch beim Auftreten höchster Drücke in dem Rohling durch die mehrfache Verriegelung in keiner Richtung ausweichen können, erhält man sehr genau verformte Erzeugenisse bzw. Keilriemenscheiben.

## Ansprüche

1. Verfahren zum Herstellen mehrrilliger Keilriemenscheiben (1), wobei zunächst ein topfförmiger Rohling (2) aus Blech durch Kaltverformung gefertigt und sodann mit seinem Rand (11) zwischen einem axial stützenden Auflager (33) mit einer kegelstumpfförmigen Fläche und radial heran bewegbaren Rillenformteilen (46, 47) mit Keilflächen eingeklemmt wird, daß axial und radial beweglich geführte Rillenformteile (54-57) in zur Erzielung der beabsichtigten Rillenmittenabstände erforderlichen Abständen vorgesehen werden, daß der Rohling (2) mit Flüssigkeit gefüllt und unter Regulierung des Flüssigkeitsdruckes und der Flüssigkeitsmenge mit Hilfe eines außen auf den Boden (3) des Rohlings (2) wirkenden, vom Pressenstempel (119) bewegbaren Formteiles (27) sowie mit Hilfe von dem am Umfang des Rohlings (2) angreifenden Rillenformteilen (46, 47 und 54-57) verformt wird, wobei die Rillenformteile (54-57) von dem sich verformenden Rohling (2) infolge von Berührungsschluß axial verschoben werden, dadurch gekennzeichnet, daß vor dem axialen Verpressen des Rohlings (2) durch das vom Pressenstempel (119) bewegliche Formteil (27) die Flüssigkeit derart unter Druck gesetzt wird, daß sich der Rohling (2) an die axial beweglich geführten Rillenformteile (46, 47 und 54-57) fest anlegt.

2. Verfahren nach Anspruch 1, dadurch gekennzeichnet, daß der Druck in der Flüssigkeit beim Füllen derart gesteuert wird, daß sich der Rohling (2) bereits etwas verformt.

3. Vorrichtung zum Herstellen einer mehrrilligen Keilriemenscheibe (1) aus Blech nach dem Verfahren nach Anspruch 1 durch Verformung eines vorgefertigten, topfförmigen, mit Flüssigkeit gefüllten Rohlings (2), der mit seinem Rand (11) zwischen einem axial stützenden Auflager (33) mit einer kegelstumpfförmigen Fläche **und radial heranbewegbaren Rillenformteilen (46, 47) mit Keilflächen eingeklemmt ist und mit Hilfe** des Flüssigkeitsdruckes und von radial bewegbaren sowie axial beweglich geführten, segmentförmigen, mindestens einen Ring bildenden, zur Herstellung der Keilrillen (13, 14, 15) dienenden Rillenformteilen (54-57) und mit Hilfe eines von einem Pressenstempel (119) axial bewegbaren, außen auf dem Boden (3) des Rohlings (2) wirkenden Formteiles (27) verformbar ist sowie mit Mitteln zum Regulieren des Flüssigkeitsdruckes und der Flüssigkeitsmenge im Rohling (2), dadurch gekennzeichnet, daß diese Mittel so ausgebildet sind, daß sie zunächst einen derartigen Anfangsdruck im Innern (81) des Rohlings (2) erzeugen, daß er sich fest an die axial beweglich geführten Rillenformteile (54-57) anlegt, ehe die axiale Verformung des Rohlings (2) durch den Pressenstempel (119) erfolgt.

4. Vorrichtung nach Anspruch 3, dadurch gekennzeichnet, daß die Mittel zum Regulieren des Flüssigkeitsdruckes derart ausgebildet sind, daß der Anfangsdruck durch den Fülldruck der Flüssigkeit erzeugt wird.

5. Vorrichtung nach Anspruch 3, dadurch gekennzeichnet, daß der den Rand (11) des Rohlings (2) von außen übergreifende Rillenformteil (46, 47) an einem Träger (36, 37) mit einem nach innen weisenden Halterand (42, 43) angeordnet ist, der einen radial nach außen weisenden Halterand des axial stützenden, starr angeordneten Auflagers (33) untergreift.

6. Vorrichtung nach Anspruch 3, dadurch gekennzeichnet, daß Bolzen (65) zum Positionieren des dem Träger (36, 37) bzw. Rillenformteil (46, 47) benachbarten Rillenformteiles bzw. Ringes (54, 55) im Träger (36, 37) vorgesehen sind, die das benachbarte Rillenformteil (54, 55) durchgreifen und einen Anschlag aufweisen, daß ferner Federn (62) zwischen dem Träger (36, 37) bzw. Rillenformteil (46, 47) und dem benachbarten Rillenformteil (54, 55) vorgesehen sind, die das Rillenformteil (54, 55) gegen den Anschlag drücken, daß bei Anordnung weiterer Rillenformteile (56, 57) diese axial durchgreifende, mit Anschlagkopf versehene Bolzen (64) und Federn (63) vorgesehen sind, die die Rillenformteile (56, 57) gegen die Anschläge drücken, wobei die Bolzen (64, 65) derart verankert sind, daß der gewünschte Mittenabstand der Keilrillen (13, 14, 15) gewährleistet ist.

7. Vorrichtung nach Anspruch 6, dadurch gekennzeichnet, daß bei Anordnung etwaiger weiterer Rillenformteile (56, 57) deren Anschlagbolzen (64) im jeweils vorhergehenden Rillenformteil (54, 55) verankert sind und daß die zugehörigen Federn (62, 63) jeweils zwischen diesen Rillenformteilen (54, 55) und (56, 57) angeordnet sind.

8. Vorrichtung nach Anspruch 6, dadurch gekennzeichnet, daß die Bolzen (64, 65) zur Einjustierung als Stellschrauben ausgebildet sind.

9. Vorrichtung nach Anspruch 3, dadurch gekennzeichnet, daß der den Rand (11) des Rohlings (2) mit Rillenformteilen (46, 47) haltende Träger (36, 37) segmentförmig ist und eine Verlängerung in Gestalt einer zylindrischen Halbschale aufweist, an der die Ringe bildenden Rillenformteile (54-57) radial nach außen abgestützt sind.

10. Vorrichtung nach Anspruch 3, dadurch gekennzeichnet, daß das den Rand (11) des Rohlings (2) von innen stützende Auflager (33) plattenförmig ist.

11. Vorrichtung nach Anspruch 3, dadurch gekennzeichnet, daß die Träger (36, 37) für die radial beweglichen Rillenformteile (46, 47) und (54-57) und das axial stützende Auflager (33) bzw. eine dieses tragende Zwischenplatte (32) einander derart untergreifende Halteränder (42, 43) mit Schrägflächen (44, 45) aufweisen, daß bei einer radial nach innen gerichteten Verspannung der radial bewegbaren Träger (36, 37) zugleich eine axiale Verspannung des den Rand (11) des Rohlings (2) haltenden Auflagers (33) und der Rillenformteile (46, 47) erfolgt.

12. Vorrichtung nach Anspruch 3, dadurch gekennzeichnet, daß zum radialen Abstützen der segmentförmigen Rillenformteile (46, 47) bzw. (54-57) bzw. Träger (36, 37) nach außen ein diese umschließender, axial aufschiebbarer, geschlossener Stützring (66) vorgesehen ist.

13. Vorrichtung nach Anspruch 3, dadurch gekennzeichnet, daß der Stützring (66) hülsenförmig ist und am Pressenstempel (119) axial verschiebbar gelagert ist.

14. Vorrichtung nach Anspruch 3, dadurch gekennzeichnet, daß am Pressenstempel (119) ein als Mitnehmer dienender Rand (23) vorgesehen ist, der beim Anheben des Pressenstempels (119) an einem als Gegenanschlag dienenden, flanschartigen Rand (68) des Stützringes (66) zur Anlage kommt und den Stützring (66) mitnimmt.

15. Vorrichtung nach Anspruch 3, dadurch gekennzeichnet, daß am Pressenstempel (119) mindestens ein federbelasteter Rasthebel (78) schwenkbar angeordnet ist, der an einem am Stützring (66) angeordneten Anschlag (73) angreift, wenn der Mitnehmer (23) und der als Gegenanschlag dienende Rand (68) zur Anlage kommen, wobei dieser Anschlag (73) den Stützring (66) in einer Richtung entgegen der Abstützrichtung von Mitnehmer (23) und Gegenanschlag (68) abstützt.

16. Vorrichtung nach Anspruch 3, dadurch gekennzeichnet, daß eine Auslösevorrichtung in Form eines Stößels bzw. Bolzens (71) vorgesehen ist, der mit einer schrägen Stirnfläche an seinem keilförmigen Ende (72) am Rasthebel (78) angreift und achsparallel im Stützring (66) geführt ist und zwecks Auslösung mit seiner anderen Stirnseite auf einer Stirnfläche (75) des Rillenformteiles (46, 47) zum Anschlag kommt.

17. Vorrichtung nach Anspruch 3, dadurch gekennzeichnet, daß Keile (48a, 49a) in Endbereichen der halbkreisförmig ausgeführten, beweglichen Rillenformteile (46, 47) bzw. (54-57) zum Zusammenhalten der Teile in Öffnungsrichtung angeordnet sind.

18. Vorrichtung nach Anspruch 3, dadurch gekennzeichnet, daß das Auflager (33) eine ringförmige Dichtung (77) aufweist.

19. Vorrichtung nach Anspruch 3, dadurch gekennzeichnet, daß ein als Anschlag (96) dienendes Distanzstück (85) auf dem Auflager (33) angeordnet ist und mehrere Bohrungen für die Flüssigkeit aufweist.

20. Vorrichtung nach Anspruch 3, dadurch gekennzeichnet, daß die Träger (36, 37) mit einer Bodenplatte (30) verriegelbar sind und ineinander greifende Zentrierbolzen (149) und Bohrungen (148) aufweisen.

## Claims

1. A method for producing a multiple groove V-belt pulley (1), wherein a cup-shaped blank (2) is initially formed from sheet metal by cold working and its then clamped by its rim (11) between an axial supporting member (33) which has a frusto-

conical surface, and groove-shaping parts (46, 47) which are radially displaceable against the blank and have wedge surfaces, wherein groove-shaping parts (54-57) guided for axial and radial displacement are disposed at spacings necessary for achieving the required spacing of the centres of the grooves, and wherein the blank (2) is filled with fluid and is worked by means of a shaping part (27) which is movable by the press ram (119) and acts on the base (3) of the blank (2) on the outside, the fluid pressure and the quantity of fluid being controlled, and by means of the groove-shaping parts (46, 47 and 54-57) which engage the periphery of the blank (2), the groove-shaping parts (54-57) being axially displaced by the blank (2) as it is worked, as a result of a contact closing, characterized in that before the axial pressing of the blank (2) by the shaping part (27) movable by the press ram (119), the fluid is placed under pressure in such a manner that the blank (2) is firmly engaged against the groove-shaping parts (46, 47 and 54-57) which are guided for axial displacement.

2. A method according to claim 1, characterized in that the pressure in the fluid during filling is controlled in such a manner that the blank (2) is already shaped to some extent.

3. Apparatus for producing a multiple groove V-belt pulley (1) from sheet metal, according to the method of claim 1, by working a prefabricated, cup-shaped blank (2) filled with fluid, which is clamped by its rim (11) between an axial supporting member (33) which has a frusto-conical surface, and groove-shaping parts (46, 47) which are radially displaceable against the blank and have wedge surfaces, the blank being workable by means of the fluid pressure and segmental groove-shaping parts (54-57) which form at least one ring, serve to produce the V-shaped grooves (13, 14, 15), are radially displaceable and are guided for axial displacement, and by means of a shaping part (27) which is axially movable by a press ram (119) and acts on the base (3) of the blank (2) on the outside, the apparatus having means for controlling the fluid pressure and the quantity of fluid in the blank (2), characterized in that this means is so formed that it initially generates a starting pressure in the interior (81) of the blank (2) such that the blank is engaged firmly against the groove-shaping parts (54-57) which are guided for axial movement, before the axial working of the blank (2) by the press ram (119) takes place.

4. Apparatus according to claim 3, characterized in that the means for controlling the fluid pressure is formed in such a manner that the starting pressure is generated by the filling pressure of the fluid.

5. Apparatus according to claim 3, characterized in that the groove-shaping part (46, 47) which engages over the rim (11) of the blank (2) from the outside is disposed on a support (36, 37) having an inwardly directed retaining edge (42, 43) which engages under a radially outwardly directed retaining edge of the axially supporting, fixedly disposed member (33).

6. Apparatus according to claim 3, characterized in that bolts (65) are provided for positioning the groove-shaping part or ring (54, 55) adjacent to the support (36, 37) or the groove-shaping part (46, 47), in the support (36, 37), the bolts passing through the adjacent groove-shaping part (54, 55) and having a stop, that in addition springs (62) are provided between the support (36, 37) or the groove-shaping part (46, 47) and the adjacent groove-shaping part (54, 55), the springs urging the groove-shaping part (54, 55) against the stop, that when further groove-shaping parts (56, 57) are included, these parts are provided with bolts (64) which pass axially through them and have a stop head, and with springs (63) which urge the groove shaping parts (56, 57) against the stops, the bolts (64, 65) being secured in such a manner that the desired spacing of the centres of the V-shaped grooves (13, 14, 15) is assured.

7. Apparatus according to claim 6, characterized in that when optional further groove-shaping parts (56, 57) are provided, their stop bolts (64) are secured in the respective preceding groove-shaping part (54, 55), and that the associated springs (62, 63) are respectively disposed between these groove-shaping parts (54, 55) and (56, 57).

8. Apparatus according to claim 6, characterized in that, for adjustment, the bolts (64, 65) are formed as set screws.

9. Apparatus according to claim 3, characterized in that the support (36, 37) which holds the rim (11) of the blank (2) against groove-shaping parts (46, 47), is segmental and has an extension in the form of a cylindrical half-shell, the groove-shaping parts (54, 57), which form rings, being supported radially in an outward direction on said extension.

10. Apparatus according to claim 3, characterized in that the member (33) supporting the rim (11) of the blank (2) from the interior is in the form of a plate.

11. Apparatus according to claim 3, characterized in that the supports (36, 37) for the radially displaceable groove-shaping parts (46, 47) and (54-57) and the axially supporting member (33) or an intermediate plate carrying this member, have retaining edges (42, 43) with inclined surfaces (44, 45), the edges engaging under one another in such a manner that when the radially displaceable supports (36, 37) are moved radially in an inward direction, an axial movement of the member (33) which retains the rim (11) of the blank (2), and of the groove-shaping parts (46, 47), takes place at the same time.

12. Apparatus according to claim 3, characterized in that for radial support of the segmental groove-shaping parts (46, 47) and (54-57) and supports (36, 37) in an outward direction, a closed, axially movable support ring (66) is provided, which embraces these parts.

13. Apparatus according to claim 3, characterized in that the support ring (66) is sleeve- shaped and is mounted in an axially movable manner on the press ram (119).

14. Apparatus according to claim 3, characterized in that an edge (23) serving as a driving dog is provided on the press ram (119), and the edges comes into abutment against a flange-form edge (68) of the support ring (66), serving as a counter-stop, when the press ram (119) is raised, and carries along the support ring (66).

15. Apparatus according to claim 3, characterized in that at least one spring-loaded stop lever (78) is pivotably disposed on the press ram (119) and engages against a stop (73) provided on the support ring (66), when the driving dog (23) and the edge (68) serving as counter-stop come into abutment, this stop (73) engaging the support ring (66) in a direction opposite to the direction of engagement of driving dog (23) and counter-stop (68).

16. Apparatus according to claim 3, characterized in that a release mechanism is provided in the form of a plunger or bolt (71), which engages with an inclined end surface against the stop lever (78) at its wedge-shaped end (72), is guided in the support ring (66) parallel to the axis of the ring and for release comes into abutment with its other end surface against an end surface (75) of the groove-shaping part (46, 47).

17. Apparatus according to claim 3, characterized in that keys (48a, 49a) are disposed in end regions of the semi-annularly formed, displaceable groove-shaping parts (46, 47) and (54-57) for holding the parts together in the opening direction.

18. Apparatus according to claim 3, characterized in that the member (33) has an annular seal (77).

19. Apparatus according to claim 3, characterized in that a spacer (85) serving as a stop (96) is disposed on the member (33) and has a plurality of bores for the fluid.

20. Apparatus according to claim 3, characterized in that the supports (36, 37) are lockable to a base plate (30) and have centralising bolts (149) and bores (148), the one engaging in the other.

## Revendications

1. Procédé pour la fabrication de poulies à courroie en forme de coin à plusieurs gorges (1), dans lequel on commence par réaliser, par déformation à froid d'une tôle, une ébauche (2) en forme de pot dont on serre le bord (11) entre un appui (33), qui le soutient dans le sens axial et dont la surface a la forme d'un tronc de cône, et des parties de moule à gorges (46, 47), qui s'appliquent contre lui en se déplaçant dans le sens radial et dont les surfaces ont la forme de coins, d'autres parties de moule à gorges (54 à 57) pouvant se déplacer dans le sens axial et dans le sens radial pour la réalisation de gorges situées à des distances déterminées les unes des autres, l'ébauche (2) étant réalisée par formage du fait qu'elle est remplie de liquide et que la pression et la quantité de liquide sont réglées à l'aide d'une partie de moule (27), qui agit extérieurement sur le fond (3) de l'ébauche (2) et dont le déplacement est commandé par la tige de presse (119), et à l'aide des parties de moule à gorges (46, 47 et 54 à 57) qui agissent sur la surface extérieure de l'ébauche (2), les parties de moule à gorges (54 à 57) étant déplacées dans le sens axial par suite de la fermeture d'un contact, caractérisé en ce qu'avant la compression axiale de l'ébauche (2) par la partie de moule (27) déplacée par la tige de presse (119) le liquide est soumis à une pression dans des conditions telles que l'ébauche (2) s'applique fortement contre les parties de moule à gorges (46, 47 et 54 à 57) qui sont guidées de manière à se déplacer dans le sens axial.

2. Procédé selon la revendication 1, caractérisé en ce que lors du remplissage, la pression du liquide est réglée de telle manière que l'ébauche (2) commence déjà à se déformer un peu.

3. Dispositif pour la fabrication, à partir de tôle, de poulies à courroie en forme de coin (1) suivant le procédé selon la revendication 1, par déformation d'une ébauche (2) qui est préparée à l'avance en forme de pot et remplie de liquide, et dont on serre le bord (11) entre un appui (33) agissant dans le sens axial et comportant une surface tronconique et des parties de moules à gorges (46, 47) se déplaçant dans le sens radial et comportant des surfaces en forme de coins pour que le formage s'effectue à l'aide d'une pression de liquide et de parties de moule à gorges (54 à 57) en forme de segments servant à la fabrication des gorges en forme de coins (16, 14, 15), en formant au moins un anneau et se déplaçant dans le sens radial et dans le sens axial et à l'aide d'une d'une partie de moule (27) pouvant se déplacer dans le sens axial sous l'action d'une tige de presse (119) et agissant extérieurement sur le fond (3) de l'ébauche (2) et à l'aide de moyens de réglage de la pression et de la quantité de liquide dans l'ébauche (2), caractérisé en ce que ces moyens sont constitués de telle manière qu'ils produisent d'abord à l'intérieur (81) de l'ébauche (2) une pression initiale telle que l'ébauche s'applique fortement contre les parties de moule à gorges (54 à 57) qui peuvent se déplacer dans le sens axial, avant que la tige de presse (119) provoque la déformation de l'ébauche (2) dans le sens axial.

4. Dispositif selon la revendication 3, caractérisé en ce que les moyens de réglage de la pression du liquide sont constitués de telle manière que la pression initiale soit produite par la pression de remplissage du liquide.

5. Dispositif selon la revendication 3, caractérisé en ce que la partie de moule à gorges (46, 47) qui entoure de l'extérieur le bord (11) de l'ébauche (2) est montée sur un support (36, 37) comportant un bord de maintien (42, 43) tourné vers l'intérieur, bord qui s'engage sous le bord de maintien tourné vers l'extérieur dans le sens radial, de l'appui (33) monté rigidement et assurant un soutien dans le sens axial.

6. Dispositif selon la revendication 3, caractérisé en ce qu'il comprend des boulons (65), pour le positionnement dans le support (36, 37) de la partie de moule à gorges ou de l'anneau (54, 55) voisin du support (36, 37) ou de la partie de moule (46, 47), qui s'engagent dans la partie de moule à gorges voisine (54, 55) et comportent une butée, en ce qu'il comprend des ressorts (62) qui sont situés entre le support (36, 37) ou la partie de moules à gorges (46, 47) et la partie de moule à gorges voisine (54, 55) et poussent la partie de moule à gorges (54, 55) contre la butée, en ce qu'il comporte, pour le montage d'autres parties de moule à gorges (56, 57), des boulons (64) et des ressorts (63) qui sont munis d'une tête de butée et s'engagent axialement dans les parties de moule à gorges qu'ils appuient contre les butées, les boulons (64, 65) étant ancrés de telle manière que les gorges en coin (13, 14, 15) sont à la distance voulue les unes des autres.

7. Dispositif selon la revendication 6, caractérisé en ce que pour le montage d'autres parties de moule à gorges (56, 57) leurs boulons de butée (64) sont ancrés dans la partie de moule à gorges précédente (54, 55) et que les ressorts correspondants (62, 63) s'intercalent entre ces parties de moules à gorges (54, 55) et (56, 57).

8. Dispositif selon la revendication 6, caractérisé en ce que les boulons (64, 65) sont des boulons de réglage permettant un positionnement exact.

9. Dispositif selon la revendication 3, caractérisé en ce que le support (36, 37) qui maintient le bord (11) de l'ébauche (2) associé aux parties de moule à gorges (46, 47) a la forme d'un segment et comporte un prolongement ayant la forme d'une demi-enveloppe cylindrique sur laquelle les parties de moule à gorges (54 à 57) formant les bagues ou anneaux prennent appui extérieurement dans le sens radial.

10. Dispositif selon la revendication 3, caractérisé en ce que l'appui (33) qui soutient de l'intérieur le bord (11) de l'ébauche (2) a la forme d'une plaque.

11. Dispositif selon la revendication 3, caractérisé en ce que les supports (36, 37) associés aux parties de moule à gorges (46, 47) et (54 à 57) qui peuvent se déplacer dans le sens radial et l'appui (33) qui associe un soutien dans le sens axial ou une plaque intermédiaire (32) qui le porte comportent des bords de maintien (42, 43) à surfaces obliques (44, 45) qui s'engagent les uns dans les autres de telle manière que tout serrage vers l'intérieur dans le sens radial, des supports (36, 37) qui peuvent se déplacer dans le sens radial entraîne en même temps un serrage dans le sens radial de l'appui (33) qui maintient le bord (11) de l'ébauche (2) et des parties de moule à gorges (46, 47).

12. Dispositif selon la revendication 3, caractérisé en ce qu'il comprend, pour l'appui dans le sens radial des parties de moule à gorges (46, 47) ou (54 à 57) ou des supports (36, 37) vers l'extérieur, une bague ou anneau d'appui (66) fermé qui les entoure et peut se déplacer dans le sens axial.

13. Dispositif selon la revendication 3, caractérisé en ce que cette bague d'appui (66) a une forme d'enveloppe et est montée sur la tige de presse (119) de manière à pouvoir se déplacer dans le sens axial.

14. Dispositif selon la revendication 3, caractérisé en ce que la tige de presse (119) comporte un bord (23) servant de pièce d'entraînement qui, lors du soulèvement de celle-ci vient en butée contre un bord (68) en forme de bride et servant de contre-butée, de la bague d'appui (66) et l'entraîne.

15. Dispositif selon la revendication 3, caractérisé en ce qu'il comprend au moins un levier (78) qui est monté sur la tige de presse (119) de manière à pouvoir tourner et est soumis à l'action d'un ressort et qui se place contre une butée (73) ménagée sur l'anneau d'appui (66) lorsque la pièce d'entraînement (23) et le bord (68) servant de contrebutée viennent en contact, cette butée (73) soutenant l'anneau d'appui (66) dans une direction opposée à la direction d'appui de la pièce d'entraînement (23) et de la contre-butée (68).

16. Dispositif selon la revendication 3, caractérisé en ce qu'il comprend un dispositif de séparation ayant la forme d'un coulisseau ou d'un boulon (71) qui par une surface frontale oblique ménagée à son extrémité en forme de coin (72) agit sur le levier (78) et est guidé dans l'anneau d'appui (66), parallèlement à son axe, et pour la séparation vient s'appuyer, par son autre surface frontale, sur une surface frontale (75) de la partie de moule à gorges (46, 47).

17. Dispositif selon la revendication 3, caractérisé en ce qu'il comporte, dans les zones terminales des parties de moule à gorges (46, 47) ou (54 à 57) semi-circulaires mobiles des coins assurant le maintien des pièces dans le sens de l'ouverture.

18. Dispositif selon la revendication 3, caractérisé en ce que l'appui (33) comporte un joint annulaire (77).

19. Dispositif selon la revendication 3, caractérisé en ce que l'appui (33) comprend une pièce de maintien à distance (85) servant de butée (96) et comportant plusieurs ouvertures pour le liquide.

20. Dispositif selon la revendication 3, caractérisé en ce que les supports (36, 37) peuvent être verrouillés avec une plaque de fond (30) et comportent des boulons de centrage (149) et des perforations (148) qui s'engagent les uns dans les autres.

# Fig.1

# Fig.2

Fig.3

# Fig.4
## IV - IV

Fig.5

Fig.6

0 002 032